(19) Europäisches Patentamt
European Patent Office
Office européen des brevets

(11) **EP 2 705 339 B1**

(12) **EUROPÄISCHE PATENTSCHRIFT**

(45) Veröffentlichungstag und Bekanntmachung des Hinweises auf die Patenterteilung:
**24.02.2016 Patentblatt 2016/08**

(21) Anmeldenummer: **12717599.0**

(22) Anmeldetag: **12.04.2012**

(51) Int Cl.:
*G01K 1/02* (2006.01)        *G01K 1/14* (2006.01)
*F24C 7/08* (2006.01)

(86) Internationale Anmeldenummer:
**PCT/EP2012/001587**

(87) Internationale Veröffentlichungsnummer:
**WO 2012/149997 (08.11.2012 Gazette 2012/45)**

(54) **VERFAHREN ZUR BESTIMMUNG DES EINSTECHWINKELS EINES KERNTEMPERATURFÜHLERS**

METHODS FOR DETERMINING THE ANGLE OF INSERTION OF A CORE TEMPERATURE SENSOR

PROCÉDÉ PERMETTANT DE DÉTERMINER L'ANGLE DE PÉNÉTRATION D'UN CAPTEUR DE TEMPÉRATURE À C UR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.05.2011 DE 102011050123**

(43) Veröffentlichungstag der Anmeldung:
**12.03.2014 Patentblatt 2014/11**

(73) Patentinhaber: **Cuciniale GmbH**
**88131 Lindau (DE)**

(72) Erfinder: **HENKE, Jörn Holger**
**CH-9404 Rorschacherberg (CH)**

(74) Vertreter: **Schultheiss & Sterzel Patentanwälte PartG mbB**
**Berner Strasse 52**
**60437 Frankfurt am Main (DE)**

(56) Entgegenhaltungen:
EP-A2- 1 757 862        DE-A1- 19 945 021
US-A1- 2008 043 809

**Beschreibung**

Die Erfindung betrifft ein Verfahren zur Bestimmung des Einstechwinkels eines Kerntemperaturfühlers mit mehreren Temperaturmesspunkten in einem Gargut zum Steuern eines Garprozesses.

Die Erfindung betrifft auch eine Steuerung für ein Gargerät zum Durchführen eines solchen Verfahrens und ein Gargerät umfassend eine solche Steuerung.

Automatische Garverfahren finden überwiegend Anwendung in professionellen Gargeräten aber auch zunehmend in Haushaltsgeräten.

Im Wesentlichen wird dabei ein sogenannter Kerntemperaturfühler, der die Temperatur im Inneren eines Garguts mit mindestens einer Messstelle misst, und eine Steuerungselektronik verwendet. Beschrieben wird eine solche Anordnung beispielsweise in der WO 93/16333 A1 Hier wird eine Lanzette mit mindestens drei Thermistoren beschrieben, die an eine Steuerungselektronik angeschlossen ist. Kennzeichnend für diese Erfindung ist, dass die Thermistoren entweder stern- oder dreiecksförmig mit einem Abstand von 1 cm bis 3 cm miteinander verbunden sind.

Es wurde bereits eine Vielzahl von Steuerungsverfahren zur Steuerung von Gargeräten vorgeschlagen, die auf der Auswertung von Temperaturmessungen basiert, die mit einem Kerntemperaturfühler in einem zu garenden Gargut erfolgt. Ein Kerntemperaturfühler umfasst meist mehrere Thermoelemente, die in einer dünnen Lanzette angeordnet sind, die in das Gargut eingestochen wird, um den Zustand des Garguts während eines Garprozesses zu überwachen und den Garprozess dabei zu steuern. Solche Garverfahren sind beispielsweise Gegenstand der EP 2 178 341 A2 und der EP 1 021 979 A1.

Da die in der Lanzette angeordneten Temperaturmesspunkte nicht immer den kältesten Punkt im Gargut treffen und daher die Kerntemperatur des Garguts direkt bestimmen können, wird einiger Aufwand betrieben, um die tatsächliche Kerntemperatur aus den vorhandenen Messdaten zu berechnen oder abzuschätzen. Dies erfolgt nach dem Stand der Technik nur dann, wenn die Messpunkte fernab des tatsächlichen Gargutkerns liegen.

Eine Beschreibung einer linearen Anordnung von Temperaturmesspunkten und eines Verfahrens mit einer Berücksichtigung der Thermokinematik der Temperaturwerte ist beispielsweise aus der DE 199 45 021 A1 bekannt. Zur

Steuerung wird dabei der zeitliche Verlauf, die Temperaturdifferenz der im Gargut liegenden Messstellen und die außerhalb des Garguts gemessene Temperatur verwendet. Ohne genauere Ausführung wird dabei vorgeschlagen, dass die Kerntemperatur des Garguts durch Extrapolation beziehungsweise Iteration zu bestimmen sei. Nachteilig ist hieran, dass derzeit keine Vorschläge dazu existieren, wie ein solches Verfahren konkret umgesetzt werden könnte, insbesondere dann, wenn keine exakte Positionierung des Kerntemperaturfühlers erfolgt ist. Um eine ungünstige Platzierung des Kerntemperaturfühlers zu vermeiden werden in der Praxis oft Positionierhilfen eingesetzt, die den Kerntemperaturfühler in eine vordefinierte Position bringen, um Lagefehler von bis zu 1,5 cm sowohl innerhalb als auch außerhalb des Garguts zu reduzieren. Dies funktioniert aber nur sehr bedingt, da die Ausdehnung der Gargüter sehr unterschiedlich ist und diese sich zum Beispiel bei Backwaren während des Backens erheblich verändern kann. Aufgrund der ungenauen Bestimmung des Kernpunkts und der Ränder des Garguts wird bei automatischen Garprozessen oft kein gutes Garergebnis erreicht.

Um dies zu verhindern, wird in der DE 103 32 021 B3 vorgeschlagen, eine Eingabe der Dicke des Nahrungsmittels durchzuführen. Nachteilig hieran ist, dass dies für den Anwender unbequem und aufwendig ist. Eine technische Lösung zur automatischen Messung der Dicke findet sich in der DE 43 02 190 A1. Beide Offenbarungen geben jedoch keine Möglichkeit an, in welcher Weise die Kerntemperatur des Garguts zu bestimmen sei.

Die Aufgabe der Erfindung besteht also darin, die Nachteile des Stands der Technik zu überwinden. Insbesondere soll sowohl die Mitte des Garguts als auch die Dicke des Garguts relativ genau bestimmt werden können und mittels automatischer Garprozesse ein optimales Garergebnis auf der Basis von Messungen hierzu zu erhalten sein. Dazu soll ein Verfahren bereitgestellt werden, mit dem ein hierfür geeigneter Parameter bestimmt wird.

Die Aufgabe der Erfindung wird gelöst durch ein Verfahren zur Bestimmung des Einstechwinkels eines Kerntemperaturfühlers mit mehreren Temperaturmesspunkten in einem Gargut zum Steuern eines Garprozesses, wobei sich der Einstechwinkel auf den Winkel zwischen der Oberfläche des Garguts, in dem eine Lanzette des Kerntemperaturfühlers steckt, und eben dieser Lanzette bezieht, bei dem ab einem Zeitpunkt t2 nach dem Einstechen des Kerntemperaturfühlers in das Gargut anhand eines gemessenen zeitlichen Temperaturanstiegs von wenigstens zwei Temperaturmesspunkten der Einstechwinkel des Kerntemperaturfühlers in das Gargut bestimmt wird.

Der Einstichwinkel kann dabei in einer beliebigen Form bestimmt werden. Alle denkbaren Maßeinheiten für den Einstichwinkel kommen für Auswertungen für die vorliegende Erfindung in Frage, insbesondere die üblichen Maßeinheiten Grad, Bogenminuten, Bogensekunden, Vollwinkel und Radiant. Der Einstichwinkel eines Kerntemperaturfühlers in einem Gargut bezieht sich erfindungsgemäß auf den Winkel zwischen der Oberfläche des Garguts, in dem eine Lanzette des Kerntemperaturfühlers steckt und eben dieser Lanzette des Kerntemperaturfühlers. Als Lanzette wird dabei der Bereich des Kerntemperaturfühlers bezeichnet, der zum Einführen in das Gargut vorgesehen ist und der die Temperaturmesspunkte zum Bestimmen der Temperaturen im Inneren des Garguts enthält. Vorzugsweise ist die Lanzette gerade ausgebildet.

Der Bestimmung des Einstechwinkels des Kerntemperaturfühlers steht es im Sinne der vorliegenden Erfindung gleich, andere Größen zu bestimmen, aus der der Einstechwinkel unmittelbar abgeleitet werden kann und die zur Steuerung eines Garprozesses verwendet werden. So kann beispielsweise der Einstechwinkel aus den unterschiedlichen Abständen der Temperaturmesspunkte zur Oberfläche des Garguts berechnet werden, wenn der Abstand der Temperaturmesspunkte zueinander bekannt ist. Der Einstechwinkel lässt sich durch eine einfache trigonometrische Berechnung aus diesen Abständen bestimmen. Also stellen die Abstände der Temperaturmesspunkte zur Oberfläche des Garguts eine zum Einstechwinkel des Kerntemperaturfühlers äquivalente Größe dar, die hiermit ausdrücklich im Sinne der vorliegenden Erfindung unter den Begriff Einstechwinkel des Kerntemperaturfühlers fallen.

Unter einem steuerbaren Garprozess ist vorliegend erfindungsgemäß ein zumindest teilweise automatisiertes Programm zu verstehen, das zumindest den Wärmeeintrag in ein Gargut steuert und dabei zu einem vorbestimmten Zielergebnis beiträgt. Der Wärmeeintrag kann beispielsweise durch Heizelemente, eine Herdplatte, eine Induktionsspule oder eine Mikrowellenquelle erfolgen.

Mit der Erfindung wird auch vorgeschlagen, dass der Einstechwinkel der Winkel zwischen einer geraden Lanzette des Kerntemperaturfühlers und der Oberfläche des Garguts an der Einstichstelle mit einem Winkel von größer als 0° und mit bis zu 90° ist.

Das Bestimmen eines Werts kann erfindungsgemäß durch eine alphanummerische Berechnung erfolgen. Die Berechnungen können dabei mit einem Mikroprozessor einer Steuerung durchgeführt werden, die das Gargerät steuert. Dabei wird vorzugsweise die Temperatur einer Herdplatte, die Temperatur eines Garraums, die Temperatur eines Garmediums, insbesondere Wasser oder Öl, die Lüftergeschwindigkeit eines Umluftofens, die Feuchtigkeit in einem Garraum und/oder eine andere Größe bestimmt, die auf den Garvorgang eines Garguts Einfluss hat.

Es kann erfindungsgemäß vorgesehen sein, dass zumindest eine zeitliche Ableitung der Temperatur an einem Temperaturmesspunkt berechnet wird durch Bilden eines Quotienten aus der Temperaturdifferenz eine Temperaturmesspunkts zu zwei Zeitpunkten oder der Temperaturdifferenz zweier über die Zeit gemittelter Temperaturen und der Zeitdifferenz zwischen den beiden Zeitpunkten oder der mittleren Zeitdifferenz zwischen den beiden Zeitpunkten.

Dabei kann auch vorgesehen sein, dass die zumindest eine gemittelte zeitliche Ableitung der Temperatur an einem Temperaturmesspunkt durch eine Mittelung mehrerer zeitlicher Ableitungen der Temperatur an einem Temperaturmesspunkt gemessen wird.

Besonders bevorzugt kann erfindungsgemäß vorgesehen sein, dass bestimmten Temperaturdifferenzen zwischen zwei Temperaturmesspunkten, zeitlichen Ableitungen der Temperaturdifferenz zwischen zwei Temperaturmesspunkten, zeitlichen Ableitungen der Temperatur an einem Temperaturmesspunkt, gemittelten zeitlichen Ableitungen der Temperatur an einem Temperaturmesspunkt und/oder dem Einstichwinkel zumindest eine Variable zugeordnet wird, die bei der Steuerung des Garprozesses berücksichtigt wird, wobei der Zusammenhang mit der zumindest einen Variablen und der Effekt den die Anwendung der zumindest einen Variablen auf den Garprozess hat, berechnet und/oder zuvor empirisch bestimmt wird.

Solche Variablen lassen sich beispielsweise dadurch auf den Garprozess anwenden, dass sie bei der Berechnung von beispielsweise der Heizleistung, die in einen Garraum eingebracht wird, der Leistung eines Induktions- und/oder Mikrowellengenerators, der Leistung einer Herdplatte, der Umdrehungszahl eines Lüfterrads zum Erzeugen von Umluft, der Leistung eines Dampfgenerators und/oder der Gaszufuhr eines Gasbrenners zum Erwärmen des Garguts angewendet werden, und haben dadurch einen Effekt auf den Garprozess. Kurzum können die Variablen dazu verwendet werden, die Stellgrößen, die zur Steuerung des Garprozesses verwendet werden, zu beeinflussen.

Ganz besonders bevorzugt kann erfindungsgemäß vorgesehen sein, dass aus Temperaturdifferenzen zwischen zwei Temperaturmesspunkten, zeitlichen Ableitungen der Temperaturdifferenz zwischen zwei Temperaturmesspunkten, zeitlichen Ableitungen der Temperatur an einem Temperaturmesspunkt, gemittelten zeitlichen Ableitungen der Temperatur an einem Temperaturmesspunkt und/oder dem Einstichwinkel des Kerntemperaturfühlers ein Korrekturbeitrag bestimmt wird, vorzugsweise berechnet wird, der von der niedrigsten und/oder zweit niedrigsten gemessenen Temperatur der Temperaturmesspunkte im Gargut abgezogen wird, um die aktuelle Kerntemperatur und/oder die zu einem späteren Zeitpunkt zu erwartende Kerntemperatur zu berechnen.

Hierdurch ergeben sich besonders geeignete Methoden, um aus den gemessenen Daten möglichst viele Informationen zur Steuerung des Garprozesses zu erhalten. Der aufgrund dieser Informationen gesteuerte Garprozess kann bei geeigneter Anwendung der Daten, die durch Experimente auch empirisch gewonnen sein können, zu besonders guten Garergebnissen führen, so dass das gegarte Gargut den Wünschen des Anwenders besonders gut entspricht.

Mit der Erfindung wird auch vorgeschlagen, dass zu einem ersten Zeitpunkt t1 nach dem Einstechen des Kerntemperaturfühlers in das Gargut anhand der Temperaturen der Temperaturmesspunkte bestimmt wird, welche der Temperaturmesspunkte sich innerhalb des Garguts und/oder außerhalb des Garguts befinden und ab dem zweiten Zeitpunkt t2, der zeitlich nach dem ersten Zeitpunkt t1 liegt, anhand des Temperaturanstiegs von wenigstens zwei Temperaturmesspunkten, die als innerhalb und/oder nicht außerhalb des Garguts liegend bestimmt wurden, der Einstechwinkel des Kerntemperaturfühlers in das Gargut bestimmt wird.

Dabei kann vorgesehen sein, dass ein Temperaturmesspunkt als außerhalb des Garguts liegend definiert wird, wenn er eine Grenztemperatur zum Zeitpunkt t1 überschreitet, vorzugsweise eine Grenztemperatur die im Bereich einer Umgebungstemperatur liegt, und/oder ein Temperaturmesspunkt als innerhalb des Garguts liegend definiert wird, wenn er zusammen mit einem weiteren Temperaturmesspunkt bei einer Temperatur unterhalb der Umgebungstemperatur liegt oder unterhalb einer Temperatur, die 0,1° C bis 10° C oberhalb der Umgebungstemperatur liegt, vorzugsweise 1° C bis 5° C oberhalb der Umgebungstemperatur.

Durch eine solche frühzeitige Definition kann das Verfahren zeitnah und besonders zuverlässig durchgeführt werden, ohne dass die Gefahr besteht, dass der Wert des Einstichwinkels später korrigiert werden muss, da die Bestimmung des Einstechwinkels aufgrund ungeeigneter Temperaturmesspunkte erfolgt. Die Messung der Umgebungstemperatur kann dabei mit einem Temperatursensor im Griff des Kerntemperaturfühlers durchgeführt werden.

Im Allgemeinen wird bei der Bestimmung, ob ein Messpunkt außerhalb des Garguts liegt, diese Definition erfindungsgemäß in Abhängigkeit vom Garprozess und/oder vom Gargut durchgeführt. So macht es für die Umgebungstemperatur beispielsweise einen Unterschied, ob ein Fisch pochiert oder gebraten wird oder ob ein zu backendes Gargut eine teigige oder eine massive Konsistenz hat. Solche Informationen können aus Anwendereingaben am Gargerät oder von anderen Messungen des Gargeräts abgelesen werden. Mit Hilfe dieser Informationen können dann geeignete Kriterien definiert werden, die bestimmen, ob sich ein Temperaturmesspunkt innerhalb oder außerhalb des Garguts befindet.

Erfindungsgemäße Verfahren können sich auch dadurch auszeichnen, dass aus dem Einstechwinkel ein Korrekturfaktor bestimmt wird, eine Bestimmung der Kerntemperatur des Garguts erfolgt, bei der der Korrekturfaktor mit einem Korrekturbeitrag multipliziert wird und der mit dem Korrekturfaktor multiplizierte Korrekturbeitrag von der niedrigsten gemessenen und/oder zweit niedrigsten gemessenen Temperatur abgezogen wird, und die so bestimmte Kerntemperatur zur Steuerung des Garprozesses verwendet wird.

Die Verwendung eines solchen Korrekturfaktors macht die Anwendung von Rechenoperationen möglich, so dass derzeit übliche Rechensysteme und Computer zur Steuerung des Verfahrens gut einsetzbar sind. Bei dem gleichzeitigen Verwenden der niedrigsten und der zweit niedrigsten Temperatur der Temperaturmesspunkte, die innerhalb des Garguts liegen, kann ein Mittelwert aus den beiden berechneten Kerntemperaturen gewonnen werden, was eine zusätzliche Verbesserung bei der Bestimmung der Kerntemperatur bewirkt. Für eine solche Mittelwertbildung werden dann also sowohl die niedrigste, als auch die zweit niedrigste gemessene Temperaturen berücksichtigt.

Dabei kann vorgesehen sein, dass der Korrekturfaktor umso größer wird, je dichter der Einstechwinkel bei 90° liegt, vorzugsweise der Sinus des Einstechwinkels des Kerntemperaturfühlers als Korrekturfaktor verwendet wird.

Diese Konkretisierungen haben sich als besonders geeignet zur Durchführung erfindungsgemäßer Verfahren herausgestellt.

Es kann auch vorgesehen sein, dass der Korrekturbeitrag von dem räumlichen Abstand der beiden Temperaturmesspunkte mit der niedrigsten Temperatur, von der Temperaturdifferenz von zumindest zwei Temperaturmesspunkten zueinander, insbesondere von der Temperaturdifferenz der beiden Temperaturmesspunkte mit der niedrigsten Temperatur zueinander, und/oder von der zeitlichen Änderung der Temperatur zumindest eines Temperaturmesspunkts, vorzugsweise zumindest zweier Temperaturmesspunkte, abhängig ist.

Diese Abhängigkeiten des Korrekturbeitrags lassen sich besonders einfach in herkömmlichen Rechensystemen verwirklichen. Die Implementierung des Verfahrens in eine bestehende Gargerätsteuerung ist dann also besonders einfach umzusetzen.

Ferner kann vorgesehen sein, dass der Einstechwinkel bei einer Bestimmung der Kerntemperatur des Garguts, bei einer Bestimmung eines Garendzeitpunktes des Garprozesses und/oder bei einer Steuerung des Energieeintrags in das Gargut zur Steuerung des Garprozesses nach dem Zeitpunkt t2 verwendet wird, vorzugsweise rechnerisch berücksichtigt wird.

Statt die Kerntemperatur zu berechnen und den Garprozess bei Erreichen einer Soll-Kerntemperatur zu beenden oder nach dem Halten einer Soll-Kerntemperatur über einen gewissen Zeitraum den Garprozess zu beenden, kann auch teilweise oder ganz auf die Bestimmung der Kerntemperatur zur Bestimmung des Garendzeitpunkts verzichtet werden. Der Garprozess wird dazu erfindungsgemäß dann beendet, wenn abhängig vom Einstechwinkel eine gewisse Zeit abgelaufen ist. Die Dauer dieser Zeit kann dazu von dem Gargerät, verschiedenen Gargutparametern, wie deren Größe, Vorbehandlung und Beschaffenheit, und/oder eben von dem Einstechwinkel abhängt. Alternativ oder besser zusätzlich dazu kann auch der Energieeintrag in das Gargut durch Erhöhen der Leistung der Heizelemente, des Mikrowellengenerators, der Herdplatten, des Dampfgenerators oder ähnlichem in Abhängigkeit von solchen Parametern durchgeführt werden.

Der Garprozess kann auch dadurch gesteuert werden, dass nicht eine korrigierte Kerntemperatur berechnet und zur Steuerung des Garprozesses verwendet wird, sondern dadurch, dass aus dem Einstechwinkel und dem oder den im Gargut gemessenen Temperaturen ein Korrekturfaktor berechnet wird, der zu einem Garendzeitpunkt addiert wird, um den Garprozess zu verlängern und damit das gewünschte Garergebnis zu erhalten. Dies ist prinzipiell und genau genommen nichts anderes als eine Korrektur der Kerntemperatur und eine Verwendung der korrigierten Kerntemperatur. Das Gleiche gilt für die Veränderung des Energieeintrags in das Gargut, durch Anpassen der Leistung von Heizelementen, wie der Herdplatte oder der Wärmetauscher einer Gasheizung eines Ofens. Solche Lösungen sind also eigentlich äquivalent zur Verwendung einer korrigierten Kerntemperatur zur Steuerung eines Garprozesses, da hier die Werte (Einstechwinkel und gemessene Temperaturen im Gargut und eventuell auch zeitliche Entwicklung der gemessenen Temperaturen im Gargut) verwendet werden, um einen Fehler bei der Messung der Kerntemperatur zu kompensieren und so eine Verbesserung der Steuerung des Garprozesses zu erreichen.

Erfindungsgemäß wird besonders bevorzugt, wenn vorgesehen ist, dass der Einstechwinkel zur Steuerung des Garprozesses unter der Annahme bestimmt wird, dass das Gargut zum Beginn des Garprozesses eine homogene Temperatur hat, die Wärme von allen Seiten gleichmäßig in das Gargut eingetragen wird und das Gargut die Form eines Zylinders hat.

Diese Annahmen sind für Gargeräte mit Garräumen, wie Öfen, Kombidämpfer und dergleichen besonders geeignet, so dass sich ein solches Verfahren besonders zur Steuerung solcher Gargeräte eignet.

Alternativ dazu kann erfindungsgemäß vorgesehen sein, dass der Einstechwinkel zur Steuerung des Garprozesses unter der Annahme berechnet wird, dass das Gargut zum Beginn des Garprozesses im Bereich einer Oberseite des Garguts eine erhöhte Temperatur hat, die Wärme von einer Unterseite des Garguts in das Gargut eingetragen wird und das Gargut die Form eines flachen Zylinders hat.

Ein solches Verfahren ist zur Steuerung eines Garvorgangs auf einer Herdplatte geeignet und ist als solches besonders bevorzugt, da solche Steuerungen derzeit noch weitgehend unbekannt sind, aber enormes Potential bieten.

Dabei kann vorgesehen sein, dass der Einstechwinkel zur Steuerung des Garprozesses unter der Annahme berechnet wird, dass sich ein Temperaturmesspunkt an der Spitze des Kerntemperaturfühlers befindet und sich dieser an der Unterseite des Garguts befindet.

Hierzu bedarf es einer Anleitung des Anwenders eines solchen Gargeräts beim Setzen des Kerntemperaturfühlers. Der Anwender wird also dazu angeleitet, den Kerntemperaturfühler stets so in das Gargut zu stechen, dass es das Gargut radial an seiner dicksten Stelle bis zum Boden der Pfanne oder des Topfs durchsticht. Die Anleitung kann beispielsweise über eine Anzeigeeinrichtung des Gargeräts erfolgen. Dieser Mehraufwand kann durch die größere Zuverlässigkeit bei der Berechnung des Einstechwinkels gerechtfertigt sein.

Ein weiteres, besonders vorteilhaftes erfindungsgemäßes Verfahren zeichnet sich dadurch aus, dass aus dem Einstechwinkel der Abstand zumindest eines Temperaturmesspunkts zur Oberfläche des Garguts und/oder die Dicke des Garguts bestimmt und dies oder diese zur Steuerung des Garprozesses verwendet wird oder werden.

Besonders die Dicke des Garguts ist ein hervorragend geeigneter Parameter um Garprozesse zu steuern, da sich daraus die zu erwartende Garzeit besonders gut berechnen oder bestimmen lässt.

Es kann auch vorgesehen sein, dass aus dem Einstechwinkel und dem zeitlichen Verlauf der Temperatur der Temperaturmesspunkte ein Temperaturprofil im Gargut und/oder der zeitliche Verlauf des Temperaturprofils im Gargut bestimmt werden.

Derart bestimmte Temperaturprofile umfassen mehr berechnete Punkte, als nur die vorhandenen, gemessenen Temperaturmesspunkte. Aus kontinuierlichen Kurven, die insbesondere auch als mathematische Funktion, beispielsweise als Fit-Funktionen dargestellt werden können, lässt sich die Kerntemperatur besonders gut ermitteln und auch der zukünftige zeitliche Verlauf der Kurven besonders gut abschätzen. Zudem führt ein Fit dazu, dass durch die vielen einfließenden Messwerte besonders genaue Werte für bestimmte Punkte der Kurven erzielbar sind, wie beispielsweise das Minimum der Kurve, die die Kerntemperatur des Garguts angibt.

Gemäß einer weiteren Ausgestaltung der Erfindung kann vorgesehen sein, dass der zeitliche Verlauf des Temperaturprofils und/oder der zeitliche und/oder örtliche Verlauf der Kerntemperatur im Gargut für die Zukunft aus dem Einstechwinkel und dem zeitlichen Verlauf der Temperatur der Temperaturmesspunkte bestimmt wird, insbesondere aus dem Temperaturprofil im Gargut und/oder dem zeitlichen Verlauf des Temperaturprofils im Gargut, wobei der prognostizierte zeitliche Verlauf des Temperaturprofils und/oder der prognostizierte zeitliche und/oder örtliche Verlauf der Kerntemperatur im Gargut zur Steuerung des Garprozesses verwendet wird.

Dies bietet weitere Möglichkeiten, den ablaufenden Garprozess besonders exakt zu steuern.

Die Aufgabe der Erfindung wird auch gelöst durch eine Steuerung für ein Gargerät zum Durchführen eines erfindungsgemäßen Verfahrens, wobei die Steuerung einen Mikroprozessor und einen Speicher zum Berechnen des Einstechwinkels, zum Durchführen eines Garprozesses und zum Steuern eines Gargeräts umfasst.

Schließlich wird die Aufgabe der Erfindung gelöst durch ein Gargerät umfassend eine solche Steuerung und zumindest einen Kerntemperaturfühler mit mehreren Temperaturmesspunkten, wobei das Gargerät vorzugsweise zumindest eine Herdplatte, ein Induktionskochfeld, einen Ofen, einen Heißluftdämpfer, einen Dämpfer oder eine Mikrowellenofen umfasst.

Der Erfindung liegt die überraschende Erkenntnis zugrunde, dass es durch die Bestimmung des Einstichwinkels in das Gargut möglich ist, den Garprozess genauer zu steuern und somit eine Verbesserung des Garergebnisses zu erreichen. Der Einstichwinkel kann dazu benutzt werden, eine Verbesserung bei der Ermittlung der Kerntemperatur zu erzielen und/oder die Dicke des Garguts zu bestimmen.

Insbesondere bei Kurzgebratenem, wie beispielsweise Fisch, Steaks oder Hähnchenbrust, kann davon ausgegangen werden, dass das Gargut in ausreichender Näherung eine Flache Form hat. Das Gargut selbst wird als ein bezüglich der Wärmeleitung homogenes Gargut angenommen. In einem Ofen dringt die Wärme in das flächige Gargut von den beiden flachen parallelen Seiten in das Gargut ein, während bei einer Pfanne die Temperatur nur von einer Seite in das Gargut eindringt. Über die Zeit wird sich in dem Gargut ein Temperaturprofil einstellen, das von der Dicke des Garguts abhängt. Andere Parameter, wie beispielsweise die Garraumtemperatur, die Temperatur der Pfanne oder die Stärke der Luftumwälzung im Garraum sind bekannt. Bei einem flachen Gargut oder auch bei einem Gargut mit einer einigermaßen ebenen Fläche, durch die die Wärme eindringt, kann zunächst davon ausgegangen werden, dass die Temperatur T eine Funktion des Abstands x von der Fläche, durch die die Wärme in das Gargut eindringt, und von der Zeit t ist.

Die Temperaturmesspunkte auf einer Lanzette sind definiert, das heißt sie haben definierte und daher bekannte Abstände zueinander. Die Abstände $x_i$ der Temperaturmesspunkte i von der Fläche des Garguts, durch die die Wärme eingetragen wird, hängen vom Einstichwinkel eines mit einer geraden Lanzette ausgestatteten Kerntemperaturfühlers in das Gargut relativ zu dieser Oberfläche ab. Einfach ausgedrückt ist der Temperaturunterschied zweier Temperaturmesspunkte auf der Lanzette umso geringer, je kleiner der Winkel zwischen der der Fläche des Garguts, durch die die Wärme in das Gargut eindringt, und dem Kerntemperaturfühler beziehungsweise der Lanzette des Kerntemperaturfühlers ist, da der die Differenz der Abstände $x_i - x_{i+1}$ der Temperaturmesspunkte i und i+1 von der als eben angenommenen Oberfläche des Garguts dann ebenfalls geringer wird.

Auch die Geschwindigkeit der Temperaturänderung dT/dt, das heißt die erste Ableitung der Temperatur nach der Zeit, eines jeden Punkts im Gargut während eines Aufwärmens des Garguts hängt von dem Abstand x von der Fläche des Garguts, durch die die Wärme in das Gargut eindringt, ab.

Aus beiden Informationen kann also umgekehrt der Einstichwinkel des Kerntemperaturfühlers in das Gargut, beziehungsweise der Winkel des Kerntemperaturfühlers relativ zu der Fläche des Garguts, durch die die Wärme in das Gargut eindringt, (vorliegend erfindungsgemäß ebenfalls als Einstichwinkel bezeichnet) bestimmt werden. Die Temperaturdifferenzen der Temperaturmesspunkte zueinander, die Temperaturänderung über die Zeit der Temperaturmesspunkte und die Differenzen der Temperaturänderungen der Temperaturmesspunkte über die Zeit können also dazu verwendet werden, den Einstichwinkel des Kerntemperaturfühlers in das Gargut zu bestimmen.

Diese Information kann dann wiederum dazu verwendet werden, den Garprozess zu steuern. Die Dicke des Garguts kann nämlich aus den Abständen $x_i$ der Temperaturmesspunkte i von beiden Oberflächen und dem Einstechwinkel bestimmt werden.

Zudem kann auch eine Präzisierung der Bestimmung der Kerntemperatur erfolgen. Bei der Messung der Kerntemperatur ist davon auszugehen, dass bei einem flachen Gargut die Kerntemperatur-Ebene, das heißt die Ebene mit der geringsten Temperatur in Gargut nicht genau von einem Temperaturmesspunkt des Kerntemperaturfühlers getroffen wird, sondern irgendwo zwischen den zwei Temperaturmesspunkten mit der niedrigsten Temperatur liegt. Je größer die Temperaturdifferenz zwischen diesen beiden Temperaturmesspunkten ist, desto dichter liegt die Kerntemperatur örtlich und absolut gesehen bei dem Temperaturmesspunkt mit der niedrigeren Temperatur. Hinzu kommt aber auch noch ein Beitrag der davon abhängt, mit welchem Einstechwinkel der Kerntemperaturfühler beziehungsweise die Lanzette des Kerntemperaturfühlers in dem flachen Gargut steckt. Je kleiner der Einstechwinkel ist, desto dichter liegen auch die beiden Temperaturmesspunkte mit den niedrigsten Temperaturen an der Kerntemperaturebene. Je kleiner der Einstechwinkel also ist, desto geringer ist die Differenz zwischen der Temperatur des kältesten Temperaturmesspunkts und der Kerntemperatur. Der Beitrag, der aus der Temperaturdifferenz der beiden kältesten Temperaturmesspunkte berechnet werden kann, kann also auch noch mit dem Einstechwinkel gewichtet werden, um eine möglichst exakte Bestimmung der tatsächlichen Kerntemperatur zu ermöglichen.

Erfindungsgemäß können auch noch weitere Korrekturfaktoren in die Bestimmung der Kerntemperatur mit einfließen, die von dem Aufbau und dem Einfluss des Kerntemperaturfühlers selbst abhängen und die empirisch bestimmt werden können.

Beispielsweise können erfindungsgemäß die folgenden Verfahrensschritte durchgeführt werden:

1. Bestimmen der Temperaturen $T_i$ an mehreren Temperaturmesspunkten in einem Gargut zu einem Zeitpunkt $t_0$ mit einem Temperaturfühler, der mehrere diskrete Temperaturmesspunkte mit einem definierten Abstand $y_i$ zueinander auf der Lanzette des Kerntemperaturfühlers besitzt.

2. Nach Energiebeaufschlagung des Garguts / Lebensmittels, vorzugsweise nach Abwarten einer Einschwingzeit, Messen der Temperaturen $T_i$ zu mehreren Zeitpunkten $t_n$ an den einzelnen Temperatursensoren $T_{i,n}$ und Berechnung des Anstiegs der Temperaturverläufe.

3. Für die Ermittlung der Mitte des Garguts werden der Einstichwinkel und die Temperaturmesspunkte bestimmt, die sich innerhalb des Garguts befinden. Dies geschieht beispielsweise durch

1) Überprüfen des Temperaturanstiegs über einen gewissen Zeitraum. Liegt der Anstieg unter einem definierten Anstieg, so befinden sich die betreffenden Temperaturmesspunkte innerhalb des Garguts.

2) Bestimmen des Verhältnisses des Temperaturanstiegs an mindestens zwei unterschiedlichen Temperaturmesspunkten, wobei der Einstichwinkel aus dem Verhältnis des Temperaturanstiegs bestimmt wird. Dies lässt sich beispielsweise wie folgt begründen:

a) Die aufgenommene Energie des Garguts / Lebensmittels bis zu einer Tiefe im Gargut, die durch die Messpunktstelle i definiert ist, in einem beliebigen Bereich, dessen Breite senkrecht zur Tiefe im Gargut so gewählt ist, dass das Gargut in guter Näherung eine flache Oberfläche hat, durch die die Wärme eintritt, und die Einflüsse durch Wärmeströmungen in das Gargut mit einem Beitrag, der von der Senkrechten zu der Oberfläche abweicht, vernachlässigt werden kann, lässt sich folgendermaßen berechnen:

$$\Delta Q_i = m * c_w * \Delta T_i$$

Wobei m die Masse dieses Bereichs und $c_w$ die spezifische Wärme des Garguts ist.
Die Masse m lässt sich durch die Dichte p in Abhängigkeit von der Entfernung vom Rand des Garguts durch folgende Formel ermitteln:

$m = p * A * x_i$ wobei p die Dichte, A die durch die Breite definierte Fläche und $x_i$ die rechtwinklige Entfernung vom Gargutrand, das heißt eine Oberfläche, durch die dem Gargut die Wärme zugeführt wird, ist. Somit ergibt sich:

$$\Delta Q_i = \rho * c_w * A * x_i * \Delta T_i$$

Der Einstichwinkel $\alpha$ errechnet sich aus:
$\sin(\alpha) = x_i / y_i$ mit $x_i$ als Abstand vom detektierten Rand.
Somit ist $\Delta Q_i = \rho * c_w * A * \sin(\alpha) * x_i * \Delta T_i$
b) Da p und $c_w$ für die jeweiligen Gargüter bekannt sind, die Fläche A als konstant betrachtet werden kann, ergibt sich folgende Proportionalität für einen Zeitraum relativ zeitnah nach Beginn der Energiezufuhr:

$$\alpha \sim arcsin(\Delta T_{i+1} / \Delta T_i)$$

c) Durch die Kenntnis des Einstechwinkels $\alpha$ lässt sich die Mitte des Garguts genau zwischen den beiden Messpunkten mit dem geringsten Temperaturanstieg ermitteln.

Dabei kann erfindungsgemäß auf beiden Seiten der Einstichwinkel ermittelt werden.
Die Auswertung des Einstichwinkels und das Temperaturverhalten können erfindungsgemäß auch eingesetzt werden, um eine Fehlstechung des Kerntemperaturfühlers zu erkennen.
Die vorliegende Erfindung kann in Gargeräten mit geschlossenen Garräumen, wie zum Beispiel in Backöfen, Fritteusen oder Kombi-Dämpfern eingesetzt werden, wo die Energie von allen Seiten auf das Gargut einwirkt. Ebenso ist diese Erfindung aber auch bei Kochfeldern einsetzbar, wo wie Energie praktisch nur von unten auf das Gargut wirkt. Diese Anwendung ist sogar besonders vorteilhaft ist, da der Kerntemperaturfühler erst nach dem Wenden der Gargüter gesteckt werden muss.
Der Kerntemperaturfühler ist mit einer Steuerungselektronik verbunden, die entsprechend des Garfortschrittes bis zum Erreichen der gewünschten Endkerntemperatur Energie zuführt.
Neben den bereits geschilderten, teilweise allgemein gültigen aber nicht beschränkenden Ausführungsbeispielen, werden im Folgenden Ausführungsbeispiele der Erfindung anhand von zwei schematisch dargestellten Figuren erläutert, ohne jedoch dabei die Erfindung zu beschränken. Dabei zeigt:

Figur 1:    eine schematische Querschnittansicht eines Garguts mit zwei in unterschiedlichen Einstichwinkeln positionierten Kerntemperaturfühlern auf einer beheizbaren Platte; und

Figur 2:    eine schematische Querschnittansicht eines Garguts mit einem Kerntemperaturfühler auf einem Gitterrost.

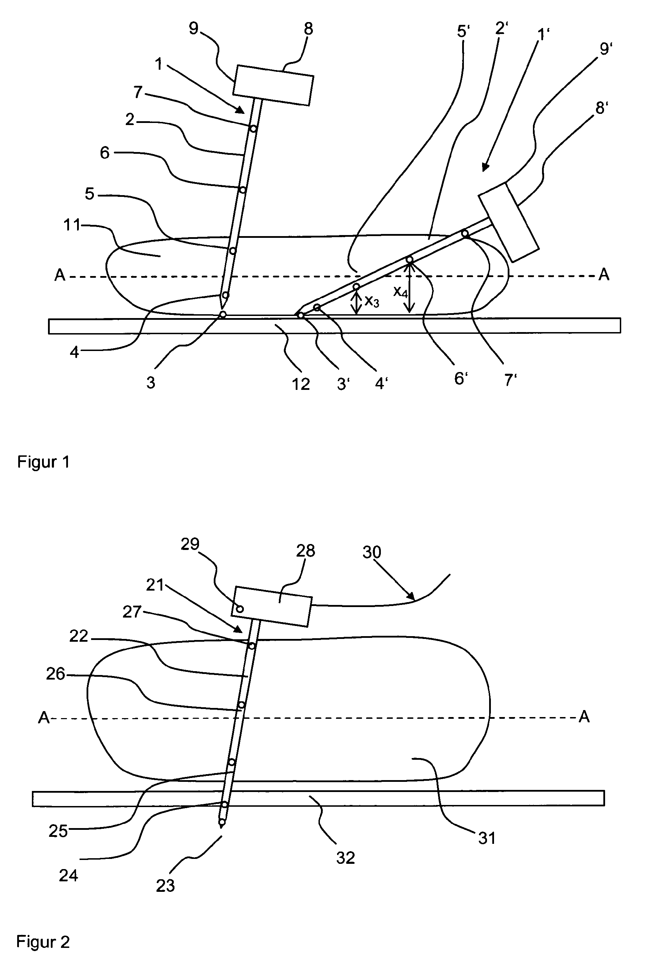

Figur 1 zeigt eine schematische Querschnittansicht eines Kerntemperaturfühlers 1 für ein erfindungsgemäßes Verfahren. Der Kerntemperaturfühler 1 umfasst eine Lanzette 2 in Form eines geraden hohlen Rohrs mit einer geschlossenen Spitze. In der Lanzette 2 sind mehrere Thermoelemente 3, 4, 5, 6, 7 angeordnet, die als Temperaturmesspunkte dienen. Der Kerntemperaturfühler 1 umfasst des Weiteren einen Griff 8 zur Handhabung des Kerntemperaturfühlers 1. In dem Griff 8 ist ein zusätzliches Thermoelement 9 angeordnet, mit dem die Umgebungstemperatur bestimmt werden kann. Im Griff 8 des Kerntemperaturfühlers 1 ist ein Sender (nicht gezeigt) angeordnet, mit dem die Thermospannungen der Thermoelemente 3, 4, 5, 6, 7, 9 zu einer Steuerung (nicht gezeigt) übertragen werden können.

Die Lanzette 2 des Kerntemperaturfühlers 1 steckt in einem Gargut 11, das auf dem heißen Boden 12 einer Pfanne oder eines Topfs liegt. Wärme wird von dem Pfannenboden 12 oder Topfboden 12 auf das Gargut 11 übertragen. dadurch erwärmt sich das Gargut 11 aus Richtung der Unterseite des Garguts 11.

Die Steuerung ist dazu ausgelegt, ein erfindungsgemäßes Verfahren durchzuführen und leitet den Anwender über eine Anzeigeeinrichtung (nicht gezeigt) hierzu an. Figur 1 zeigt dabei eine Situation bei der erfindungsgemäß das Gargut 11 bereits von der oberen Seite über einen festen Zeitraum angebraten wurde. Die Steuerung gibt dem Anwender nach dem Ablauf dieser festen Zeit (beispielsweise nach drei Minuten) auf der Anzeigeeinrichtung und/oder mit einem Warnton eine Aufforderung, dass das Gargut 11 gewendet werden soll und anschließend der Kerntemperaturfühler 1 und/oder ein zweiter Kerntemperaturfühler 1' in das Gargut 11 eingestochen werden soll. Figur 1 zeigt nun die Situation nach dem Einstechen.

In Figur 1 ist zusätzlich ein weiterer Kerntemperaturfühler 1' gezeigt, der in einem anderen Einstechwinkel in das Gargut 11 eingestochen ist. Für das erfindungsgemäße Verfahren reicht ein einzelner Kerntemperaturfühler aus, so dass nicht beide Kerntemperaturfühler 1, 1' notwendig sind. Das Verfahren ist aber ohne weiteres auch mit mehr als einem Kerntemperaturfühler 1, 1' ausführbar. Vorliegend sollen die unterschiedlichen Positionen und Einstechwinkel der Kerntemperaturfühler 1, 1' lediglich das erfindungsgemäße Verfahren bei zwei unterschiedlichen Situationen erläutern. Die Spitzen der Lanzetten 2, 2' sind in beiden Fällen bis zum Boden 12 der Pfanne durch das Gargut 11 gestochen.

Der zweite Kerntemperaturfühler 1' ist, wie der erste Kerntemperaturfühler 1, mit einer Lanzette 2', fünf Thermoelementen 3', 4', 5', 6', 7' in der Lanzette 2', einem Griff 8', einem Thermoelement 9' im Griff 8' und einem Sender (nicht gezeigt) zum Übertragen von Daten des Kerntemperaturfühlers 1' zur Steuerung aufgebaut.

Das Gargut 11 wird von unten durch die heiße Platte 12 erhitzt. Dadurch steigt die Temperatur im Gargut 11 an. Mit der Zeit dringt die Temperatur immer weiter durch das Gargut 11 vor. Für den mittleren Teil des Garguts 11 gilt: die Höhe Temperatur im Inneren des Garguts 11 hängt zu einem gegebenen Zeitpunkt t davon ab, welchen Abstand x der Punkt im Gargut 11 von der Oberfläche des Garguts 11 hat, die auf der heißen Platte 12 aufliegt.

Der Temperaturverlauf im Gargut 11 kann in guter Näherung in Abhängigkeit vom Abstand x mathematisch durch e-Funktionen beschrieben werden. Die Messung beginnt 20 bis 60 Sekunden, vorzugsweise 30 bis 50 Sekunden nach dem Einstechen des Kerntemperaturfühlers 1, 1'. Diese Einschwingzeiten haben sich als besonders vorteilhaft erwiesen, da sich dann die Einschwingvorgänge und anfänglichen Ungenauigkeiten durch die Wärmeflüsse im Kerntemperaturfühler 1, 1' und seiner Umgebung ausgeglichen haben. Ganz besonders bevorzugt wird ein Beginn der ersten Messung nach 40 Sekunden. Diese Einschwingzeiten sind auch für einen Garprozess in einem Garraum, wie beispielsweise einem Ofen besonders vorteilhaft, um die Einschwingvorgänge abzuwarten und so eine zuverlässige erste Messung zu erhalten.

Für den ersten Kerntemperaturfühler 1 gilt, dass die Temperaturmesspunkte 3 und 4 im Inneren des Garguts 11 der Unterseite des Garguts 11 zugewandt sind, während der Messpunkt 5 im Inneren des Garguts 11 der Oberseite des Garguts 11 zugewandt ist. Die Temperaturmesspunkte 6 und 7 liegen außerhalb des Garguts 11. Das Thermoelement 9, 9' im Griff 8, 8' des Kerntemperaturfühlers 1, 1' liegt immer außerhalb des Garguts 11 und kann daher zur Bestimmung der Umgebungstemperatur verwendet werden. Nach der Einschwingzeit wird bei der ersten Messung gemessen, dass die Temperaturen der Temperaturmesspunkte 6 und 7 die Umgebungstemperatur haben und daher nicht im Gargut 11 liegen sollten. Um dies sicherzustellen kann der zeitliche Verlauf der Temperaturen dieser Messpunkte 6, 7 weiter verfolgt werden. Wenn sich keine Änderung ergibt, kann davon ausgegangen werden, dass diese sich tatsächlich im Gargut 11 befinden.

Es kann auch davon ausgegangen werden, dass das Thermoelement 3, 3' in der Spitze der Lanzette 2, 2' im Bereich der Oberfläche des Garguts 11 positioniert ist, die durch die Platte 12 beheizt wird. Dies kann durch die Geschwindigkeit des Temperaturanstiegs des Temperaturmesspunkts 3, 3' während des Garprozesses verifiziert werden. Der Temperaturmesspunkt 4, 4' sollte in jedem Fall weiter von der Oberfläche des Garguts 11 entfernt sein als der Temperaturmesspunkt 3, 3'. Daher wird nach der Einschwingzeit die Temperatur am Temperaturmesspunkt 3, 3' höher sein, als am Temperaturmesspunkt 4, 4'. Aus der Temperaturdifferenz der beiden Messpunkte 3, 3', 4, 4' lässt sich der Einstechwinkel des Kerntemperaturfühlers 1, 1' bestimmen. Je dichter der zweite Temperaturmesspunkt 4, 4' an der Oberfläche des Garguts 11 liegt, desto höher ist seine Temperatur und desto kleiner ist seine Temperaturdifferenz zu dem Temperaturmesspunkt 3, 3' in der Spitze der Lanzette 2, 2'.

Der Einstechwinkel des Kerntemperaturfühlers 1, 1' kann bei geeigneter Geometrie aber auch anhand der Temperaturdifferenz beliebiger anderer Temperaturmesspunkte 3, 3', 4, 4', 5, 5', 6, 6', 7, 7' ermittelt werden, wie im Folgenden anhand des Flach eingestochenen Kerntemperaturfühlers 1' (mit kleinem Einstechwinkel) erläutert werden soll.

Der Abstand $x_3$ des dritten Temperaturmesspunkts 5' zur Oberfläche des Garguts 11 ist größer als

der Abstand $x_4$ des vierten Temperaturmesspunkts 6' zu dieser Oberfläche. Dies führt zu einem Zeitpunkt, bei dem die Wärmeenergie schon tief in das Gargut eingedrungen ist, also bis über die Mittelebene des Garguts 11, die in Figur 1 durch die gestrichelte Linie A-A gekennzeichnet ist, dazu, dass die Temperatur am Temperaturmesspunkt 5' schneller ansteigt und höher ist, als am Temperaturmesspunkt 6'. Dies wird erst zu einem späteren Zeitpunkt als der ersten Messung also nach der Einschwingzeit so sein. Wenn die Oberseite des Garguts 11 schon sehr viel Wärme aufgenommen hat, kann es dabei auch zu einer kleineren Abweichung von der idealen Abkling-Funktion bei dem Temperaturverlauf im Gargut 11 kommen.

Aus der bekannten Temperaturverteilung, die einer abklingenden e-Funktion in Richtung des Inneren des Garguts 11 folgt, und dem bekannten Verlauf des Temperaturanstiegs über die Zeit bei verschiedenen Abständen $x_i$ von der Unterseite des Garguts 11 können die Abstände $x_3$, $x_4$ der Messpunkte 5', 6' zur Oberfläche berechnet werden. Aus den Abständen $x_3$, $x_4$ und dem bekannten Abstand y der beiden Messpunkte 5', 6' auf der Lanzette 2' kann mittels einfacher trigonometrischer Formeln der Winkel der Lanzette 2' zu der Oberfläche des Garguts 11 und damit der Einstechwinkel des Kerntemperaturfühlers 1' bestimmt werden. Der Einstechwinkel ist der Arcus-Sinus des Verhältnisses der Abstandsdifferenz $x_3 - x_4$ zur Oberfläche des Garguts 11 und des Abstands der Messpunkte 5', 6' auf der Lanzette 2.

Diese Überlegung greift auch für beliebige andere Paare von Temperaturmesspunkten 3, 3', 4, 4', 5, 5', 6, 6', 7, 7'. Aus den verschiedenen Berechnungen können sich verschiedene Einstechwinkel ergeben, die im Verlauf des Verfahrens gewichtet gemittelt werden können, um einen besonders präzisen Wert für den Einstechwinkel zu erhalten.

Aus dem Einstechwinkel und dem zeitlichen Verlauf der Temperatur eines Temperaturmesspunkts 5, 6' in der Nähe der oberen Oberfläche des Garguts 11 kann dann auch die Dicke des Garguts 11 abgeschätzt werden. Je dichter ein Temperaturmesspunkt an der oberen Oberfläche des Garguts 11 liegt, desto früher und stärker wird die Temperatur an diesem Punkt wieder absinken, da das von dieser Seite bereits angebratene Gargut 11 von oben kühlt und die Wärme ins Innere des Garguts 11 diffundiert. Die so bestimmte Dicke des Garguts 11 kann dazu verwendet werden, die Stärke der Beheizung der Pfanne 12 zu steuern und den Garprozess zu einem geeigneten Zeitpunkt abzubrechen, so dass das Gargut 11 nach dem Garprozess und einem zu erwartenden Temperaturausgleich im Gargut 11 nach dem Garprozess die gewünschte Gare beziehungsweise den gewünschten Garzustand hat.

Auch bei der Bestimmung der aktuellen Kerntemperatur kann der Einstechwinkel nutzbringend verrechnet werden. Zum Ende des Garprozesses sollte die zu erreichende Kerntemperatur in der Mittelebene A des Garguts 11 realisiert sein. Meist wird jedoch keiner der Temperaturmesspunkte 3, 3', 4, 4', 5, 5', 6, 6', 7, 7' genau in dieser Ebene liegen, sondern dazwischen. Wie stark die tatsächliche Kerntemperatur in der Mittelebene A des Garguts 11 von der niedrigsten gemessenen Temperatur gegen Ende des Garprozesses abweicht, hängt davon ab, wie dick das Gargut 11 ist, wie dicht der Temperaturmesspunkte 3, 3', 4, 4', 5, 5', 6, 6', 7, 7' an der Mittelebene liegen und wie groß der Einstechwinkel des Kerntemperaturfühlers 1, 1' ist. Je dicker das Gargut 11 ist, beziehungsweise je größer die Abstände der Temperaturmesspunkte 4, 5, 5', 6 mit der niedrigsten Temperatur von der Oberfläche des Garguts 11 gegen Ende des Garvorgangs sind, desto flacher wird die durch e-Funktionen annäherbare Parabel im Bereich der Mitte des Garguts 11 sein und demzufolge, desto geringer wird der Beitrag sein, der von der niedrigsten gemessenen Temperatur im Inneren des Garguts 11 abgezogen werden muss, um zu einer korrekteren Kerntemperatur zu gelangen.

Analoges gilt für den Einstechwinkel des Kerntemperaturfühlers 1, 1', der durch Multiplikation des Beitrags mit dem Sinus des Einstechwinkels berücksichtigt werden kann. Wie dicht der Temperaturmesspunkt 4, 5, 5', 6 mit der niedrigsten Temperatur im Gargut 11 an der Mittelebene A liegt, kann durch die Temperaturdifferenz der beiden Temperaturmesspunkte 3, 3', 4, 4', 5, 5', 6, 6', 7, 7' mit der niedrigsten Temperatur bestimmt werden, wobei nur die Temperaturmesspunkte 3, 3', 4, 4', 5, 5', 6, 6', 7, 7' berücksichtigt werden, die Innerhalb des Garguts 11 liegen und deren Temperatur nach Beginn der Messung vorzugsweise bis zumindest fast zum Ende der Messung angestiegen ist. Das letzte Kriterium soll verhindern, dass Temperaturmesspunkte 3, 3', 4, 4', 5, 5', 6, 6', 7, 7' berücksichtigt werden, die zu dicht an der oberen Oberfläche des Garguts 11 liegen.

Die exakten mathematischen Formulierungen werden vorzugsweise empirisch und damit passend zum jeweiligen Gargut, Gargerät, beziehungsweise zum jeweiligen Kerntemperaturfühler 1, 1' bestimmt. Durch die aufgezeigten Maßnahmen lässt sich der Einstechwinkel, die Dicke des Garguts und eine Verbesserung bei der Bestimmung der Kerntemperatur erzielen. Alle diese Größen können zur Steuerung des Garprozesses verwendet werden und damit zu einer Verbesserung des Garergebnisses führen.

Der Garprozess kann auch dadurch gesteuert werden, dass statt eine korrigierte Kerntemperatur zu berechnen und zur Steuerung des Garprozesses zu verwenden, aus dem Einstechwinkel und dem oder den im Gargut 11 gemessenen Temperaturen der Temperaturmesspunkte 3, 3', 4, 4', 5, 5', 6, 6', 7, 7' einen Korrekturfaktor zu berechnen mit dem die Gardauer verlängert wird oder mit dem die Leistung der Herdplatte verändert wird. Dies stellt eine andere Form der Korrektur der gemessenen Kerntemperatur dar. Bei einem solchen Verfahren kann die niedrigste gemessene Temperatur der Temperaturmesspunkte 3, 3', 4, 4', 5, 5', 6' im Gargut als Kerntemperatur definiert werden. Der automatische Garprozess wird dann beispielsweise nicht bei Erreichen einer bestimmten Kerntemperatur beendet, sondern eine gewisse Zeitspanne danach. Die Größe dieser Zeitspanne ist dann wider durch den Einstechwinkel des Kerntemperaturfühlers und durch den Abstand und die Temperaturdifferenz der beiden Temperaturmesspunkte 4, 5, 5', 6' mit der niedrigsten Temperatur bestimmt. Je größer der Einstechwinkel zur Fläche der Pfanne und damit zur oberen Oberfläche des Garguts 11 ist und je größer der Abstand der beiden Messpunkte zueinander ist und je kleiner die Temperaturdifferenz der beiden Temperaturmesspunkte 4, 5, 5', 6' mit der niedrigsten Temperatur ist, desto größer wird diese Zeitspanne gewählt.

Ein ähnliches Verfahren kann für die Veränderung des Energieeintrags in das Gargut 11, durch Anpassen der Leistung von Heizelementen, wie der Herdplatte angewendet werden.

In Figur 1 wurde anhand eines Ausführungsbeispiels gezeigt, wie sich das erfindungsgemäße Verfahren in einer Pfanne oder einem anderen einseitig geheizten Gargerät (nicht gezeigt) einsetzen lässt. Figur 2 zeigt nun, wie sich das erfindungsgemäße Verfahren auch auf Garräume von Gargeräten (nicht gezeigt), wie beispielsweise von Öfen, anwenden lässt, bei denen die Wärme von allen Seiten in ein Gargut 31 eindringt.

Figur 2 zeigt dazu eine schematische Querschnittansicht eines Kerntemperaturfühlers 21 umfassend eine Lanzette 22 in der mehrere Thermoelemente 23, 24, 25, 26, 27 zur Bestimmung der Temperatur im Inneren des Garguts 31 angeordnet sind. Der Kerntemperaturfühler 21 umfasst ferner einen Griff 28, in dem ein Thermoelement 29 zur Bestimmung der Umgebungstemperatur (hier der Garraumtemperatur) angeordnet ist. Das Thermoelement 29 im Griff 28 ist, wie im Übrigen auch das Thermoelement 9, 9' im Griff 8, 8' der Kerntemperaturfühler 1, 1', nicht für die Ausführung erfindungsgemäßer Verfahren notwendig, bietet jedoch einige Vorteile bei der Umsetzung.

Die Thermoelemente 23, 24, 25, 26, 27 sind über ein Kabel 30 mit einer Steuerung (nicht gezeigt) verbunden, mit der das Erfindungsgemäße Verfahren realisiert wird. Dazu hat die Steuerung eine Recheneinheit und eine Speichereinheit. Eine solche Steuerung für ein erfindungsgemäßes Verfahren kann also beispielsweise durch einen handelsüblichen Computer realisiert werden.

Das Gargut 31 liegt hier auf einem Gitterrost 32. Dadurch ist es möglich, dass das Gargut 31 vollständig mit dem Kerntemperaturfühler 21 durchstochen wird. Es ist also hier nicht mehr sichergestellt, dass einer der Temperaturmesspunkte 23, 24, 25, 26, 27 an der Oberfläche des Garguts 31 liegt. Zudem tritt die Wärmeenergie allseitig in das Gargut 31 ein. Dies vereinfacht jedoch auch einiges, da sich der kälteste Punkt immer im zentralen Bereich der Mittelebene A (in Figur 2 durch eine gestrichelte Linie A-A gekennzeichnet) befindet.

Die Außenliegenden, nicht im Gargut 31 befindlichen Temperaturmesspunkte 23, 24 können nach einer Einschwingzeit, wie sie bereits beschrieben ist, dadurch bestimmt werden, dass sie die Garraumtemperatur angenommen haben, die beispielsweise mit Hilfe des Thermoelements 29 im Griff 28 des Kerntemperaturfühlers 21 gemessen wird.

Der Einstechwinkel des Kerntemperaturfühlers 21 kann analog dem Beispiel nach Figur 1 bestimmt werden, wobei hier die Abstände x der Temperaturmesspunkte von beiden Seiten des Garguts 31 bestimmt werden können. Hierdurch lässt sich aus dem Einstechwinkel wiederum die Dicke des Garguts 31 bestimmen.

Auch die Bestimmung der Kerntemperatur des Garguts 31 kann analog den Ausführungsbeispielen nach Figur 1 erfolgen.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

**Bezugszeichenliste**

| | |
|---|---|
| 1, 1' 21 | Kerntemperaturfühler |
| 2, 2', 22 | Lanzette |
| 3, 3', 23 | Thermoelement in der Lanzettenspitze / 1. Temperaturmesspunkt |
| 4, 4', 24 | Thermoelement / 2. Temperaturmesspunkt |
| 5, 5', 25 | Thermoelement / 3. Temperaturmesspunkt |
| 6, 6', 26 | Thermoelement / 4. Temperaturmesspunkt |
| 7, 7', 27 | Thermoelement / 5. Temperaturmesspunkt |
| 8, 8', 28 | Griff |
| 9, 9', 29 | Thermoelement im Griff |
| 11,31 | Gargut |
| 12 | Pfannenboden |
| 30 | Kabel |
| 32 | Gitterrost |
| A-A | Mittelebene im Gargut |
| $x_3$ | Abstand des 3. Temperaturmesspunkts von der Oberfläche des Garguts |
| $x_4$ | Abstand des 4. Temperaturmesspunkts von der Oberfläche des Garguts |

**Patentansprüche**

1. Verfahren zur Bestimmung des Einstechwinkels eines Kerntemperaturfühlers (1, 1' 21) mit mehreren Temperaturmesspunkten (3, 3', 4, 4', 5, 5', 6, 6', 7, 7', 23, 24, 25, 26, 27) in einem Gargut (11, 31) zum Steuern eines Garprozesses, wobei sich der Einstechwinkel auf den Winkel zwischen der Oberfläche des Garguts (11, 31), in dem eine Lanzette (2, 2', 22) des Kerntemperaturfühlers (1, 1', 21) steckt, und eben dieser Lanzette (2, 2', 22) bezieht, bei dem ab einem Zeitpunkt t2 nach dem Einstechen des Kerntemperaturfühlers (1, 1', 21) in das Gargut (11, 31) anhand eines gemessenen zeitlichen Temperaturanstiegs von wenigstens zwei Temperaturmesspunkten (3, 3', 4, 4', 5, 5', 6, 6', 7, 7', 23, 24, 25, 26, 27) der Einstechwinkel des Kerntemperaturfühlers (1, 1', 21) in das Gargut (11, 31) bestimmt wird.

2. Verfahren nach Anspruch 1, **dadurch gekennzeichnet, dass** zu einem ersten Zeitpunkt t1 nach dem Einstechen des Kerntemperaturfühlers (1, 1', 21) in das Gargut (11, 31) anhand der Temperaturen der Temperaturmesspunkte (3, 3', 4, 4', 5, 5', 6, 6', 7, 7', 23, 24, 25, 26, 27) bestimmt wird, welche der Temperaturmesspunkte (3, 3', 4, 4', 5, 5', 6, 6', 7, 7', 23, 24, 25, 26, 27) sich innerhalb des Garguts (11, 31) und/oder außerhalb des Garguts (11, 31) befinden und
ab dem zweiten Zeitpunkt t2, der zeitlich nach dem ersten Zeitpunkt t1 liegt, anhand des Temperaturanstiegs von wenigstens zwei Temperaturmesspunkten (3, 3', 4, 4', 5, 5', 6, 6', 7, 7', 23, 24, 25, 26, 27), die als innerhalb und/oder nicht außerhalb des Garguts (11, 31) liegend bestimmt wurden, der Einstechwinkel des Kerntemperaturfühlers (1, 1', 21) in das Gargut (11, 31) bestimmt wird.

3. Verfahren nach Anspruch 2, **dadurch gekennzeichnet, dass** ein Temperaturmesspunkt (3, 3', 4, 4', 5, 5', 6, 6', 7, 7', 23, 24, 25, 26, 27) als außerhalb des Garguts (11, 31) liegend definiert wird, wenn er eine Grenztemperatur zum Zeitpunkt t1 überschreitet, vorzugsweise eine Grenztemperatur die im Bereich einer Umgebungstemperatur liegt, und/oder ein Temperaturmesspunkt (3, 3', 4, 4', 5, 5', 6, 6', 7, 7', 23, 24, 25, 26, 27) als innerhalb des Garguts (11, 31) liegend definiert wird, wenn er zusammen mit einem weiteren Temperaturmesspunkt (3, 3', 4, 4', 5, 5', 6, 6', 7, 7', 23, 24, 25, 26, 27) bei einer Temperatur unterhalb der Umgebungstemperatur liegt oder unterhalb einer Temperatur, die 0,1° C bis 10° C oberhalb der Umgebungstemperatur liegt, vorzugsweise 1° C bis 5° C oberhalb der Umgebungstemperatur.

4. Verfahren nach Anspruch 1, 2 oder 3, **dadurch gekennzeichnet, dass** aus dem Einstechwinkel ein Korrekturfaktor bestimmt wird, eine Bestimmung der Kerntemperatur des Garguts (11, 31) erfolgt, bei der der Korrekturfaktor mit einem Korrekturbeitrag multipliziert wird und der mit dem Korrekturfaktor multiplizierte Korrekturbeitrag von der niedrigsten und/oder zweit niedrigsten gemessenen Temperatur abgezogen wird, und die so bestimmte Kerntemperatur zur Steuerung des Garprozesses verwendet wird.

5. Verfahren nach Anspruch 4, **dadurch gekennzeichnet, dass** der Korrekturfaktor umso größer wird, je dichter der Einstechwinkel bei 90° liegt, vorzugsweise der Sinus des Einstechwinkels des Kerntemperaturfühlers (1, 1', 21) als Korrekturfaktor verwendet wird.

6. Verfahren nach Anspruch 4 oder 5, **dadurch gekennzeichnet, dass** der Korrekturbeitrag von dem räumlichen Abstand der beiden Temperaturmesspunkte (3, 3', 4, 4', 5, 5', 6, 6', 7, 7', 23, 24, 25, 26, 27) mit der niedrigsten Temperatur, von der Temperaturdifferenz von zumindest zwei Temperaturmesspunkten (3, 3', 4, 4', 5, 5', 6, 6', 7, 7', 23, 24, 25, 26, 27) zueinander, insbesondere von der Temperaturdifferenz der beiden Temperaturmesspunkte (3, 3', 4, 4', 5, 5', 6, 6', 7, 7', 23, 24, 25, 26, 27) mit der niedrigsten Temperatur zueinander, und/oder von der zeitlichen Änderung der Temperatur zumindest eines Temperaturmesspunkts (3, 3', 4, 4', 5, 5', 6, 6', 7, 7', 23, 24, 25, 26, 27), vorzugsweise zumindest zweier Temperaturmesspunkte (3, 3', 4, 4', 5, 5', 6, 6', 7, 7', 23, 24, 25, 26, 27), abhängig ist.

7. Verfahren nach einem der vorangehenden Ansprüche, **dadurch gekennzeichnet, dass** der Einstechwinkel bei einer Bestimmung der Kerntemperatur des Garguts (11, 31), bei einer Bestimmung eines Garendzeitpunktes des Garprozesses und/oder bei einer Steuerung des Energieeintrags in das Gargut (11, 31) zur Steuerung des Garprozesses nach dem Zeitpunkt t2 verwendet wird, vorzugsweise rechnerisch berücksichtigt wird.

8. Verfahren nach einem der vorangehenden Ansprüche, **dadurch gekennzeichnet, dass** der Einstechwinkel zur Steuerung des Garprozesses unter der Annahme bestimmt wird, dass das Gargut (11, 31) zum Beginn des Garprozesses eine homogene Temperatur hat, die Wärme von allen Seiten gleichmäßig in das Gargut (11, 31) eingetragen wird und das Gargut (11, 31) die Form eines Zylinders hat.

9. Verfahren nach einem der Ansprüche 1 bis 7, **dadurch gekennzeichnet, dass** der Einstechwinkel zur Steuerung des Garprozesses unter der Annahme berechnet wird, dass das Gargut (11, 31) zum Beginn des Garprozesses im Bereich einer Oberseite des Garguts (11, 31) eine erhöhte Temperatur hat, die Wärme von einer Unterseite des Garguts (11, 31) in das Gargut (11, 31) eingetragen wird und das Gargut (11, 31) die Form eines flachen Zylinders hat.

10. Verfahren nach Anspruch 9, **dadurch gekennzeichnet, dass** der Einstechwinkel zur Steuerung des Garprozesses unter der Annahme berechnet wird, dass sich ein Temperaturmesspunkt (3, 3', 23) an der Spitze des Kerntemperaturfühlers (1, 1', 21) befindet und sich dieser an der Unterseite des Garguts (11, 31) befindet.

**11.** Verfahren nach einem der vorangehenden Ansprüche, **dadurch gekennzeichnet, dass** aus dem Einstechwinkel der Abstand zumindest eines Temperaturmesspunkts (3, 3', 4, 4', 5, 5', 6, 6', 7, 7', 23, 24, 25, 26, 27) zur Oberfläche des Garguts (11, 31) und/oder die Dicke des Garguts (11, 31) bestimmt und dies oder diese zur Steuerung des Garprozesses verwendet wird oder werden.

**12.** Verfahren nach einem der vorangehenden Ansprüche, **dadurch gekennzeichnet, dass** aus dem Einstechwinkel und dem zeitlichen Verlauf der Temperatur der Temperaturmesspunkte (3, 3', 4, 4', 5, 5', 6, 6', 7, 7', 23, 24, 25, 26, 27) ein Temperaturprofil im Gargut (11, 31) und/oder der zeitliche Verlauf des Temperaturprofils im Gargut (11, 31) bestimmt wird.

**13.** Verfahren nach einem der vorangehenden Ansprüche, **dadurch gekennzeichnet, dass** der zeitliche Verlauf des Temperaturprofils und/oder der zeitliche und/oder örtliche Verlauf der Kerntemperatur im Gargut (11, 31) für die Zukunft aus dem Einstechwinkel und dem zeitlichen Verlauf der Temperatur der Temperaturmesspunkte (3, 3', 4, 4', 5, 5', 6, 6', 7, 7', 23, 24, 25, 26, 27) bestimmt wird, insbesondere aus dem Temperaturprofil im Gargut (11, 31) und/oder dem zeitlichen Verlauf des Temperaturprofils im Gargut (11, 31), wobei der prognostizierte zeitliche Verlauf des Temperaturprofils und/oder der prognostizierte zeitliche und/oder örtliche Verlauf der Kerntemperatur im Gargut (11, 31) zur Steuerung des Garprozesses verwendet wird.

**14.** Steuerung für ein Gargerät zum Durchführen eines Verfahrens nach einem der vorangehenden Ansprüche, **dadurch gekennzeichnet, dass** die Steuerung einen Mikroprozessor und einen Speicher zum Berechnen des Einstechwinkels, zum Durchführen eines Garprozesses und zum Steuern eines Gargeräts umfasst.

**15.** Gargerät umfassend eine Steuerung nach Anspruch 14 und zumindest einen Kerntemperaturfühler (1, 1', 21) mit mehreren Temperaturmesspunkten (3, 3', 4, 4', 5, 5', 6, 6', 7, 7', 23, 24, 25, 26, 27), wobei das Gargerät vorzugsweise zumindest eine Herdplatte, ein Induktionskochfeld, einen Ofen, einen Heißluftdämpfer, einen Dämpfer oder eine Mikrowellenofen umfasst.

**Claims**

**1.** A method for determining the insertion angle of a core temperature probe (1, 1', 21) having a plurality of temperature measuring points (3, 3', 4, 4', 5, 5', 6, 6', 7, 7', 23, 24, 25, 26, 27) in a food to be cooked (11, 31) for controlling a cooking process, wherein the insertion angle refers to the angle between the surface of the food to be cooked (11, 31), in which a lance (2, 2', 22) of the core temperature probe (1, 1', 21) is placed, and this very lance (2, 2', 22), in which,
starting at a time t2 after insertion of the core temperature probe (1, 1', 21) into the food to be cooked (11, 31), the insertion angle of the core temperature probe (1, 1', 21) into the food to be cooked (11, 31) is determined based on a measured increase in temperature of at least two temperature measuring points (3, 3', 4, 4', 5, 5', 6, 6', 7, 7', 23, 24, 25, 26, 27) over time.

**2.** The method according to claim 1, **characterized in that** it is determined, at a first time t1 after insertion of the core temperature probe (1, 1', 21) into the food to be cooked (11, 31), based on the temperatures of the temperature measuring points (3, 3', 4, 4', 5, 5', 6, 6', 7, 7', 23, 24, 25, 26, 27) which of the temperature measuring points (3, 3', 4, 4', 5, 5', 6, 6', 7, 7', 23, 24, 25, 26, 27) is located within the food to be cooked (11, 31) and/or outside the food to be cooked (11, 31), and starting at the second time t2, which is temporally after the first time t1, the insertion angle of the core temperature probe (1, 1', 21) into the food to be cooked (11, 31) is determined based on the increase in temperature of at least two temperature measuring points (3, 3', 4, 4', 5, 5', 6, 6', 7, 7', 23, 24, 25, 26, 27) that were determined as being located within and/or not outside the food to be cooked (11, 31).

**3.** The method according to claim 2, **characterized in that** a temperature measuring point (3, 3', 4, 4', 5, 5', 6, 6', 7, 7', 23, 24, 25, 26, 27) is defined as being located outside the food to be cooked (11, 31) if this point exceeds a threshold temperature at the time t1, preferably a threshold temperature that is in the range of an ambient temperature, and/or a temperature measuring point (3, 3', 4, 4', 5, 5', 6, 6', 7, 7', 23, 24, 25, 26, 27) is defined as being located within the food to be cooked (11, 31) if this point, together with a further temperature measuring point (3, 3', 4, 4', 5, 5', 6, 6', 7, 7', 23, 24, 25, 26, 27), has a temperature below the ambient temperature or below a temperature that is $0.1\underline{o}C$ to $10\underline{o}C$ above the ambient temperature, and preferably $1\underline{o}C$ to $5\underline{o}C$ above the ambient temperature.

**4.** The method according to claim 1, 2 or 3, **characterized in that** a correction factor is determined from the insertion angle, a determination of the core temperature of the food to be cooked (11, 31) is made in which the correction factor is multiplied with a correction contribution, and the correction contribution multiplied with the correction factor is subtracted from the lowest temperature and/or second-lowest measured temperature, and the core temperature thus determined is used to control the cooking process.

5. The method according to claim 4, **characterized in that**
the correction factor increases the closer the insertion angle is to 90º, and preferably the sine of the insertion angle of the core temperature probe (1, 1', 21) is used as the correction factor.

6. The method according to claim 4 or 5, **characterized in that**
the correction contribution is dependent on the spatial distance of the two temperature measuring points (3, 3', 4, 4', 5, 5', 6, 6', 7, 7', 23, 24, 25, 26, 27) having the lowest temperature, the temperature difference between at least two temperature measuring points (3, 3', 4, 4', 5, 5', 6, 6', 7, 7', 23, 24, 25, 26, 27), in particular the temperature difference between the two temperature measuring points (3, 3', 4, 4', 5, 5', 6, 6', 7, 7', 23, 24, 25, 26, 27) having the lowest temperature, and/or on the change of the temperature of at least one temperature measuring point (3, 3', 4, 4', 5, 5', 6, 6', 7, 7', 23, 24, 25, 26, 27) over time, and preferably of at least two temperature measuring points (3, 3', 4, 4', 5, 5', 6, 6', 7, 7', 23, 24, 25, 26, 27).

7. A method according to any one of the preceding claims, **characterized in that** the insertion angle is used, and preferably is taken into consideration computationally, in a determination of the core temperature of the food to be cooked (11, 31), in a determination of a cooking end time of the cooking process and/or in a control of the energy input into the food to be cooked (11, 31) for controlling the cooking process after the time t2.

8. A method according to any one of the preceding claims, **characterized in that** the insertion angle for controlling the cooking process is determined under the assumption that the food to be cooked (11, 31) has a homogeneous temperature at the beginning of the cooking process, the heat is uniformly introduced into the food to be cooked (11, 31) from all sides, and the food to be cooked (11, 31) has the shape of a cylinder.

9. A method according to any one of claims 1 to 7, **characterized in that**
the insertion angle for controlling the cooking process is calculated under the assumption that the food to be cooked (11, 31) has an elevated temperature in the region of an upper side of the food to be cooked (11, 31) at the beginning of the cooking process, the heat is introduced into the food to be cooked (11, 31) from an underside of the food to be cooked (11, 31), and the food to be cooked (11, 31) has the shape of a flat cylinder.

10. The method according to claim 9, **characterized in that**
the insertion angle for controlling the cooking process is calculated under the assumption that a temperature measuring point (3, 3', 23) is located at the tip of the core temperature probe (1, 1', 21) and the same is located on the underside of the food to be cooked (11, 31).

11. A method according to any one of the preceding claims, **characterized in that** the distance of at least one temperature measuring point (3, 3', 4, 4', 5, 5', 6, 6', 7, 7', 23, 24, 25, 26, 27) from the surface of the food to be cooked (11, 31) and/or the thickness of the food to be cooked (11, 31) are determined from the insertion angle, and this is used, or these are used, to control the cooking process.

12. A method according to any one of the preceding claims, **characterized in that** a temperature profile in the food to be cooked (11, 31) and/or the temporal progression of the temperature profile in the food to be cooked (11, 31) are determined from the insertion angle and the temporal progression of the temperature of the temperature measuring points (3, 3', 4, 4', 5, 5', 6, 6', 7, 7', 23, 24, 25, 26, 27).

13. A method according to any one of the preceding claims, **characterized in that** the temporal progression of the temperature profile and/or the temporal and/or local progression of the core temperature in the food to be cooked (11, 31) for the future are determined from the insertion angle and the temporal progression of the temperature of the temperature measuring points (3, 3', 4, 4', 5, 5', 6, 6', 7, 7', 23, 24, 25, 26, 27), in particular from the temperature profile in the food to be cooked (11, 31) and/or the temporal progression of the temperature profile in the food to be cooked (11, 31), wherein the forecast temporal progression of the temperature profile and/or the forecast temporal and/or local progression of the core temperature in the food to be cooked (11, 31) are used to control the cooking process.

14. A control unit for a cooking appliance for carrying out a method according to any one of the preceding claims, **characterized in that**
the control unit comprises a microprocessor and a memory for calculating the insertion angle, for carrying out a cooking process, and for controlling a cooking appliance.

15. A cooking appliance comprising a control unit according to claim 14 and at least one core temperature probe (1, 1', 21) having a plurality of temperature measuring points (3, 3', 4, 4', 5, 5', 6, 6', 7, 7', 23, 24, 25, 26, 27), wherein the cooking appliance preferably comprises at least one stovetop, an induction cook top, an oven, a combi steamer, a steamer or a microwave oven.

**Revendications**

1. Procédé de détermination de l'angle d'insertion d'un capteur de la température à coeur (1, 1', 21) avec plusieurs points de mesure de la température (3, 3', 4, 4', 5, 5', 6, 6', 7, 7', 23, 24, 25, 26, 27) dans un produit à cuire (11, 31) pour la programmation d'un processus de cuisson, où l'angle d'insertion concerne l'angle entre la surface du produit à cuire (11, 31), dans lequel est enfoncée une lancette (2, 2', 22) du capteur de la température à coeur (1, 1', 21), et justement cette lancette (2, 2', 22), où l'angle d'insertion du capteur de la température à coeur (1, 1', 21) dans le produit à cuire (11, 31) est déterminé à partir d'un instant t2 après l'insertion du capteur de la température à coeur (1, 1', 21) dans le produit à cuire (11, 31) à l'aide d'une élévation de la température mesurée dans le temps par au moins deux points de mesure de la température (3, 3', 4,4', 5,5', 6,6', 7,7', 23, 24, 25, 26, 27).

2. Procédé selon la revendication 1, **caractérisé en ce qu'**à un premier instant t1 après l'insertion du capteur de la température à coeur (1, 1', 21) dans le produit à cuire (11, 31), à l'aide des températures des points de mesure de la température (3, 3', 4, 4', 5, 5', 6, 6', 7, 7', 23, 24, 25, 26, 27), on détermine lesquels parmi les points de mesure de la température (3, 3', 4, 4', 5, 5', 6, 6', 7, 7', 23, 24, 25, 26, 27) se situent à l'intérieur du produit à cuire (11, 31) et/ou à l'extérieur du produit à cuire (11, 31), et qu'à partir d'un deuxième instant t2, qui se situe après le premier instant t1 dans le temps, l'angle d'insertion du capteur de la température à coeur (1, 1', 21) dans le produit à cuire (11, 31) est déterminé à l'aide de l'élévation de la température d'au moins deux points de mesure de la température (3, 3', 4, 4', 5, 5', 6, 6', 7, 7', 23, 24, 25, 26, 27) qui ont été déterminés comme étant situés à l'intérieur et/ou non à l'extérieur du produit à cuire (11, 31).

3. Procédé selon la revendication 2, **caractérisé en ce qu'**un point de mesure de la température (3, 3', 4, 4', 5, 5', 6, 6', 7, 7', 23, 24, 25, 26, 27) est défini comme se situant à l'extérieur du produit à cuire (11, 31) s'il dépasse une température limite à l'instant t1, de préférence, une température limite qui se situe dans le domaine de la température ambiante, et/ou qu'un point de mesure de la température (3, 3', 4,

4', 5, 5', 6, 6', 7, 7', 23, 24, 25, 26, 27) est défini comme se situant à l'intérieur du produit à cuire (11, 31) s'il se situe ensemble avec un autre point de mesure de la température (3, 3', 4, 4', 5, 5', 6, 6', 7, 7', 23, 24, 25, 26, 27) à une température en dessous de la température ambiante ou en dessous d'une température qui se situe de 0,1 °C à 10 °C au dessus de la température ambiante, de préférence de 1 °C à 5 °C au dessus de la température ambiante.

4. Procédé selon les revendications 1, 2 ou 3, **caractérisé en ce qu'**un facteur de correction est déterminé à partir de l'angle d'insertion, qu'une détermination de la température à coeur du produit à cuire (11, 31) est réalisée, dans laquelle le facteur de correction est multiplié par une contribution de correction et que la contribution de correction multipliée par le facteur de correction est retirée de la température la plus basse, et/ou de la deuxième température la plus basse, mesurées, et que la température à coeur ainsi déterminée est utilisée pour la programmation du processus de cuisson.

5. Procédé selon la revendication 4, **caractérisé en ce que** le facteur de correction est d'autant plus important que l'angle d'insertion se situe près de 90 °, de préférence, on emploiera le sinus de l'angle d'insertion du capteur de la température à coeur (1, 1', 21) en tant que facteur de correction.

6. Procédé selon les revendications 4 ou 5, **caractérisé en ce que** la contribution de correction est dépendante de la distance spatiale entre les deux points de mesure de la température (3, 3', 4, 4', 5, 5', 6, 6', 7, 7', 23, 24, 25, 26, 27) par rapport à la température la plus basse, de la différence de température d'au moins deux points de mesure de la température (3, 3', 4, 4', 5, 5', 6, 6', 7, 7', 23, 24, 25, 26, 27) l'un par rapport à l'autre, notamment, de la différence de température des deux points de mesure de la température (3, 3', 4, 4', 5, 5', 6, 6', 7, 7', 23, 24, 25, 26, 27) avec la température la plus basse l'un par rapport à l'autre, et/ou de la modification de la température dans le temps d'au moins un point de mesure de la température (3, 3', 4, 4', 5, 5', 6, 6', 7, 7', 23, 24, 25, 26, 27), de préférence d'au moins de deux points de mesure de la température (3, 3', 4, 4', 5, 5', 6, 6', 7, 7', 23, 24, 25, 26, 27).

7. Procédé selon l'une des revendications précédentes, **caractérisé en ce que** l'angle d'insertion est utilisé, de préférence, en en tenant compte par le calcul, lors d'une détermination d'une température à coeur du produit à cuire (11, 31), lors d'une détermination d'un instant de la cuisson du processus de cuisson et/ou lors d'une programmation d'un apport d'énergie dans le produit à cuire (11, 31) pour la programmation du processus de cuisson après l'instant t2.

8. Procédé selon l'une des revendications précédentes, **caractérisé en ce que** l'angle d'insertion est déterminé pour la programmation du processus de cuisson en admettant qu'au début du processus de cuisson, le produit à cuire (11, 31) a une température homogène, que la chaleur est transmise dans le produit à cuire (11, 31) de manière homogène à partir de tous les côtés et que le produit à cuire (11, 31) possède la forme d'un cylindre.

9. Procédé selon l'une des revendications 1 à 7, **caractérisé en ce que** l'angle d'insertion est calculé pour la programmation du processus de cuisson en admettant que le produit à cuire (11, 31) a une température plus élevée dans la zone de la face supérieure du produit à cuire (11, 31) en début du processus de cuisson, que la chaleur est apportée dans le produit à cuire (11, 31) à partir d'une face inférieure du produit à cuire (11, 31) et que le produit à cuire (11, 31) a la forme d'un cylindre plat.

10. Procédé selon la revendication 9, **caractérisé en ce que** l'angle d'insertion est calculé pour la programmation du processus de cuisson en admettant qu'un point de mesure de la température (3, 3', 23) se situe à la pointe du capteur de la température à coeur (1, 1', 21) et que celui-ci se situe sur la face inférieure du produit à cuire (11, 31).

11. Procédé selon l'une des revendications précédentes, **caractérisé en ce qu'**à partir de l'angle d'insertion, la distance d'au moins un point de mesure de la température (3, 3', 4, 4', 5, 5', 6, 6', 7, 7', 23, 24, 25, 26, 27) jusqu'à la surface du produit à cuire (11, 31) et/ou l'épaisseur du produit à cuire (11, 31) sont déterminées et que celle-ci, ou celles-ci, est utilisée, ou sont utilisées, pour la programmation du processus de cuisson.

12. Procédé selon l'une des revendications précédentes, **caractérisé en ce qu'**un profil de température dans le produit à cuire (11, 31) et/ou la variation du profil de température dans le temps dans le produit à cuire (11, 31) sont déterminés à partir de l'angle d'insertion et de la variation de la température dans le temps des points de mesure de la température (3, 3', 4, 4', 5, 5', 6, 6', 7, 7', 23, 24, 25, 26, 27).

13. Procédé selon l'une des revendications précédentes, **caractérisé en ce que** la variation du profil de température dans le temps et/ou la variation de la température à coeur dans le produit à cuire (11, 31) dans le temps et/ou locale sont déterminées pour l'avenir à partir de l'angle d'insertion et de la variation avec le temps de la température des points de mesure de la température (3, 3', 4, 4', 5, 5', 6, 6', 7, 7', 23, 24, 25, 26, 27), notamment à partir de la variation dans le temps du profil de température dans le produit à cuire (11, 31), où la variation du profil de température avec le temps pronostiquée et/ou la variation de la température à coeur dans le produit à cuire avec le temps et/ou locale pronostiquées sont employées pour la programmation du processus de cuisson.

14. Programmation pour un appareil de cuisson pour l'exécution d'un procédé selon l'une des revendications précédentes, **caractérisée en ce que** la programmation comprend un microprocesseur et une mémoire pour le calcul de l'angle d'insertion, pour l'exécution d'un processus de cuisson et pour la programmation d'un appareil de cuisson.

15. Appareil de cuisson comprenant une programmation selon la revendication 14 et au moins un capteur de la température à coeur (1, 1', 21) avec plusieurs points de mesure de température (3, 3', 4, 4', 5, 5', 6, 6', 7, 7', 23, 24, 25, 26, 27), où l'appareil de cuisson comprend de préférence au moins une plaque chauffante, une plaque de cuisson à induction, un four, un four mixte, un cuiseur à la vapeur ou un four à micro-ondes.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9316333 A1
- EP 2178341 A2
- EP 1021979 A1
- DE 19945021 A1
- DE 10332021 B3
- DE 4302190 A1